Europäisches Patentamt

European Patent Office

Office européen des brevets

(19)

(11) Publication number: **0 366 470**
**A2**

# EUROPEAN PATENT APPLICATION

(21) Application number: **89311065.0**

(22) Date of filing: **26.10.89**

(51) Int. Cl.⁵: **B32B 27/34**

(30) Priority: **26.10.88 US 262704**

(43) Date of publication of application:
**02.05.90 Bulletin 90/18**

(84) Designated Contracting States:
**DE FR GB IT**

(71) Applicant: **Levy, Harry**
**219-04 Stewart Road**
**Hollis Hills New York(US)**

(72) Inventor: **Levy, Harry**
**219-04 Stewart Road**
**Hollis Hills New York(US)**

(74) Representative: **Powell, Stephen David et al**
**J.F. Williams & Co. 34 Tavistock Street**
**London WC2E 7PB(GB)**

(54) Waterproof fabric.

(57) A waterproof fabric especially for military shelter applications comprises a first layer (10) of nylon camouflage fabric material, a second layer (12) of polyurethane film, a third layer (14) of nylon tricot fabric material, and adhesive laminations joining the layers together, the outer surface of the first layer having a water repellant coating comprising an emulsified fluorocarbon mixed with a non-fluorinated extender and a reactant resin catalyst. The adhesive laminations comprise mixtures of polyurethane adhesives having a range of viscosities.

EP 0 366 470 A2

## Waterproof Fabric

The present invention relates to waterproof fabrics and more particularly to light-weight water repellent materials for ecotat shelters in military applications.

As is well known, ecotat shelters for military applications are typically transported about by the serviceman until field usage. As is similarly well known, the most desirable fabrics to be used in the manufacture of such shelters should exhibit the characteristics of being as light-weight as possible, whilst still maintaining the best possible integrity against water and wind. Optimally, the fabrics should be able to withstand washing and dry-cleaning, while at the same time affording a degree of breathability to the inhbitant once the shelter is erected (as a tent, or otherwise) by the serviceman on duty.

As will be appieciated by those skilled in the art, the fabric most commonly used in the manufacture of ecotat shelters today is a poncho-type material, coated with one of a plurality of resins. Although providing adequate use during normal weather conditions, such constructions have proven to be burdensome to carry (because of their relatively heavy weight), and not as waterproof as the end-user would have preferred.

According to a first aspect of the present invention there is provided a waterproof fabric characterised in that it comprises a first layer of fabric material a second layer of polyurethane film, a third layer of nylon tricot fabric material, adhesive laminations joining said first and second, and said second and third layers together, and a water repellant coating on the side of the said first layer remote from the adhesive lamination joining said first and second layers together, said water repellant coating including an emulsified fluoro-carbon mixed with a non-fluorinated extender and a reactant resin catalyst.

An advantage of the above fabric is that it is lightweight and exceptionally waterproof and is especially suitable for use in shelter constructions for military applications. The fabric is completely water and wind resistant, washable and cleanable, and quite breathable.

According to a second aspect of the present invention there is provided a waterproof fabric characterised in that it comprises a first layer of lightweight fabric material, a second layer of polyurethane film, a third layer of nylon tricot fabric material and adhesive laminations joining said first and second and said second and third layers together, the adhesive laminations comprising adhesive mixtures composed of substantially the following formulation by weight:

polyurethane adhesive of viscosity 6,000 cps ± 2,000 cps ---39.2%

polyurethane adhesive of viscosity 27,000 cps ±2,500 cps ---39.2%

polyurethane adhesive of viscosity 8,000 cps ± 2,000 cps ---9.8% and

polyurethane adhesive of viscosity 5,000 cps ± 2,000 cps ---11.8%

An advantage of the above fabric is that its layers are strongly adhered together, and the adhesive withstands a plurality of washing and dry-cleaning operations.

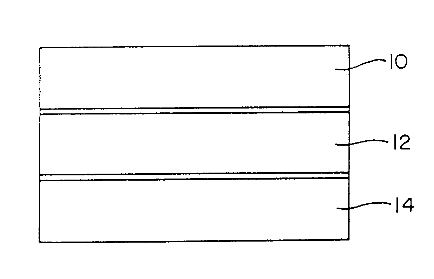

Preferred embodiments of the present invention will now be described, by way of example only, with reference to the accompanying drawing which shows a waterproof fabric having three layers.

The first layer 10 is of a light-weight washable, high tensile strength fabric material, which in military applications of ecotat shelters may comprise a typical nylon camouflage fabric, with a "woodland" pattern and having a general weight of 2.8 ± 0.2 ounces per square yard, (95 ± 7 gms per sq.metre). Such fabric, moreover, is generally woven with a minimum of 101 ends per inch, (40 ends per cm) and 63 two-ply textured picks per inch (25 per cm).

The fabric also comprises second and third layers 12,14 respectively. Layer 12 is a polyurethane film of weight typically 1.06± 0.2 ounces per square yard, (36 ± 7 gms per sq.metre) and layer 13 is a nylon tricot fabric material of typical weight 1.5± 0.3 ounces per square yard, (51 ± 10.2 gms per sq metre). In a preferred example the polyurethane film layer 12 was selected of 1.25 mil (0.0032 cm) thickness, while the nylon tricot fabric layer was selected of an olive green 106 colour so as to blend in with the nylon camouflage fabric when employed in a shelter construction. The overall appearance is thus that of an inner polyurethane layer sandwiched between outer layers of fabric material.

The construction is completed by laminating the layers 10 and 12 together, and laminating the layers 12 and 14 together, using an adhesive mixture formed of the composition:

1) polyurethane adhesive of viscosity 6,000 cps ± 2,000 cps - 39.2% by weight.

2) polyurethane adhesive oF viscosity 27,000 cps ± 2,500 cps - 39.2% by weight.

3) polyurethane adhesive of viscosity 8,000 cps ± 2,000 cps - 9.8% by weight.

4) polyurethane adhesive of viscosity 5,000 cps ± 2,000 cps - 11.8% by weight.

Such polyurethane adhesives are generally available, and manufactured by Soluol Chemical Compny, Warwick, Rhode Island, under the Tradenames Solubond 1177, Solubond 173, Solubond 1168, and Solubond 1101, respectively. Any appropriate lamination technique may be employed in this manufacture, with or without curing. In one method of manufacturing the fabric of the invention, the layers 10 and 12 were first laminated together, allowed to sit, and then laminated to the third layer 14.

Once so constructed, the fabric is then exposed to any appropriate water-repellant treatment on the face, or exposed, side of the layer 10, for example, with a treatment of an emulsified fluorocarbon mixed with a non-fluorinated extender and a reactant resin catalyst to enhance durability. One particularly attractive treatment of this type employed an emulsified fluorocarbon, non-fluorinated extender and a reactant resin in proportions of 12,12 and 1 by weight respectively. One emulsified fluorocarbon employed was manufactured by the Dupont Chemical Company of Wilmington, Delawre under the Tradename Zepel, while the fluorinated extender could be that same Company's product sold under the Tradename Nalan W. With this construction, the water-repellant chemical mixture can be deposited on the exposed side of the layer 10 over a range of 1.5% to 4% by weight of the fabric employed, and give the results desired.

The resulting fabric composition has been found, through testing, to exhibit very many desirable advantages for its use as a shelter fabric. Firstly, it has been found to be 100% waterproof, and with its weight being of the order of 6 ounces per square yard, (200 gms per sq. metre) is very light weight. The fabric has been tested to have a very high tensile strength, and a breaking strength of over 150 pounds, (68 Kg). Additionally, it has been tested to be quite washable and dry-cleanable, to the extent that it can withstand up to ten machine washings without any de-lamination of the layers, even in the presence of organic liquids employed in the cleansing process. The fabric has been determined to exhibit a hydrostatic resistance of over 100 PSI, (7 Kg per sq.cm) yet exhibit a very soft stiffness, of under 12 PSI (0.84 Kg per sq.cm). The breathability afforded also provided the advantage of enabling the serviceman to sit within under temperatures of stifling heat, with the tent shelter so formulated continuing to offer a high degree of breathability.

Whereas the fabric has been particularly described in the context of ecotat shelters in military applications, it will be appreciated by those skilled in the art that equal advantages would follow from using any available lightweight fabric as the exterior layer to be coated with the water repellant treatment. The fabric may be used for non-military shelter construction and other applications which exploit the advantages of a breathable, lightweight fabric having the characteristics of washability, high tensile strength, and softness of composition.

## Claims

1. A waterproof fabric characterised in that it comprises a first layer (10) of fabric material, a second layer (12) of polyurethane film, a third layer (14) of nylon tricot fabric material, adhesive laminations joining said first and second, and said second and third layers together, and a water repellant coating on the side of said first layer remote from the adhesive lamination joining said first and second layers together, said water repellant coating including an emulsified fluorocarbon mixed with a non-fluorinated extender and a reactant resin catalyst.

2. A fabric according to claim 1 wherein the adhesive laminations comprise adhesive mixtures composed of substantially the following formulation by weight:
polyurethane adhesive of viscosity 6,000 cps ± 2,000 cps ---39.2%
polyurethane adhesive of viscosity 27,000 cps ±2,500 cps ---39.2%
polyurethane adhesive of viscosity 8,000 cps ± 2,000 cps ---9.8% and
polyurethane adhesive of viscosity 5,000 cps ± 2,000 cps ---11.8%

3. A fabric according to claim 1 or 2 wherein the material of the first layer (10) has a weight in the range of 95 ± 7 gms per sq.metre, the material of the second layer (12) has a weight in the range of 36 ± 7 gms per sq.metre, and the material in the third layer(14) has a weight within the range 51 ± 10.2 gms per sq.metre.

4. A fabric according to any preceding claim, wherein the first layer (10) is of a cloth material woven with a minimum of 40 ends per cm.

5. A fabric according to any preceding claim, wherein the first layer (10) is of a cloth material woven with a minimum of 25 two-ply textured picks per cm.

6. A fabric according to any of claims 1 to 3, wherein the first layer (10) is of nylon camouflage material.

7. A fabric according to any preceding claim wherein the emulsified fluorocarbon, the non-fluorinated extender and the reactant resin catalyst are mixed in proportions of 12,12 and 1 respectively.

8. A waterproof fabric characterised in that it comprises a first layer (10) of lightweight fabric material, a second layer (12) of polyurethane film; a third layer (14) of nylon tricot fabric material and adhesive laminations joining said first and second and said second and third layers together, the adhesive laminations comprising adhesive mixtures composed of substantially the following formulation by weight:

polyurethane adhesive of viscosity 6,000 cps ± 2,000 cps ---39.2%

polyurethane adhesive of viscosity 27,000 cps ±2,500 cps ---39.2%

polyurethane adhesive of viscosity 8,000 cps ± 2,000 cps ---9.8% and

polyurethane adhesive of viscosity 5,000 cps ± 2,000 cps ---11.8%

9. A fabric according to claim 8 wherein there is also included a water repellant coating on the side of said first layer remote from the adhesive lamination joining said first and second layers together.

10. A waterproof shelter comprising a fabric according to any preceding claim.